# EUROPEAN PATENT APPLICATION

(11) **EP 1 752 039 A1**
(43) Date of publication of application: **14.02.2007**
(21) Application number: 05257282.3
(22) Date of filing: 28.11.2005
(51) Int. Cl.: A01K 5/01

(54) **Animal feeding bowl**

(30) Priority: 09.08.2005 GB 0516326
(71) Applicant: Butcher's Pet Care Limited, Crick Northamptonshire NN6 7TZ (GB)
(72) Inventor: Thompson, Phil, Crick, Northamptonshire NN6 7TZ (GB)
(74) Representative: Moffat, John Andrew

(57) **Abstract**

The present invention relates to packaging and in particular to packaging for pet food that may also be used as an animal feeding bowl. Known containers are relatively lightweight and in consuming food from them a pet may push the bowl around during feeding resulting in inadvertent spillage of the pet food from the container. This results not only in waste of the pet food, but creates mess requiring cleaning. Packaging (2) which may also be used as an animal feeding bowl is disclosed comprising a central bowl (10) and a releasable lid (12), in which a base (20) of the central bowl (10) is provided with a plurality of anti-slip means (40) formed from a hot melt adhesive. It is an advantage that such packaging is simple to manufacture and does not create additional waste requiring cleaning by, for example, a person responsible for feeding the pet.

## Description

The present invention relates to packaging and in particular to packaging for foods such as food for a pet which may also be used as an animal feeding bowl.

It has been known to provide food for a pet, such as a cat or a dog, in a container such as a tin. A person responsible for feeding the pet must first open the container and transfer food for the pet sufficient for a single serving to a bowl from which the pet may then feed. Such a routine, while straightforward presents a number of problems. Firstly, if not all food is transferred from the container the opened container containing the remaining food for the pet must then be stored. Where the food in the container is wet food, there is a reluctance to store the food for the pet together with food for humans. Accordingly there is a danger of spoiling of the remaining food for the pet. Secondly, the person responsible for feeding the pet must take care not to provide an excess of food for the pet, since over time, this may lead to health problems for the pet.

To overcome these difficulties it is known to supply food for a pet in a container that, once the person responsible for feeding the pet has removed a covering, may also serve as a bowl from which the pet may eat the food directly. By supplying a nutritionally balanced single serving in such a container, both of the problems identified above are solved. However, such known containers are relatively lightweight and in consuming food from such containers it is known for a pet to push such a bowl around during feeding resulting in inadvertent spillage of the food for the pet from the container.

This results not only in waste of the food for the pet, but creates mess requiring cleaning.

A number of solutions to this problem have been presented.

For example it is known from WO 97/48272 A1 to provide a supporting structure for a bowl for animals. The supporting structure is provided with a number of threaded holes though which a threaded screw may be received. The crews are provided with a rubber head that serves as a foot for the supporting structure. However since the bowl and the supporting structure are separate there is a danger that the pet may cause the bowl to be dislodged from the supporting structure thereby creating further waste and mess. Also, the supporting structure may become separated from the bowl, and so may be lost by the person responsible for feeding the pet. Accordingly this is not a convenient solution to the problems identified.

It is known from WO 03/069985 to provide an animal feeding bowl moulded from plastics having four equally spaced sockets adapted to receive spigots. The spigots are formed with friction affording feet, for example of moulded rubber. It will be appreciated that for each bowl it is necessary to mould the feet to the spigots and insert the spigots to the sockets. Thus while the danger of separation of the feet from the bowl is removed, the process of manufacturing such a bowl remains relatively complex. Since the bowls are sold containing only a single serving of food for a pet, it will be appreciated that the bowls are intended to be disposable. Such manufacturing complexity is undesirable in a product intended for a single use. Further if metal spigots are used with a plastics bowl and rubber feet recycling of or otherwise processing of the disposed bowl becomes unnecessarily complex.

A solution to some of these difficulties is disclosed by EP 1 304 028 that discloses a bowl, the base of which is provided with an adhesive pad. When sold, the adhesive pad is covered with a release strip. In use, the person responsible for feeding the pet removes the release strip exposing the adhesive. The bowl is then located by the person responsible for feeding the pet at a chosen feeding location. The adhesive pad adheres to the surface of the feeding location, such as tile or linoleum, and prevents the pet from pushing the bowl around during feeding. However, when the person responsible for feeding the pet comes to remove the bowl from the feeding location there is a danger that the adhesive pad may not come away with the bowl but instead remains, or at least partially remains, adhered to the floor surface. In such a circumstance, it will be necessary for the adhesive pad, or part thereof, to be cleaned from the surface.

It is an advantage of the present invention that it provides a packaging, and in particular a packaging for foods such as food for a pet, which may also be used as an animal feeding bowl that is simple to manufacture and does not create additional waste requiring cleaning by, for example, a person responsible for feeding the pet.

According to the present invention, packaging which may also be used as an animal feeding bowl comprises a central bowl and a releasable lid, the bowl having a base and an upstanding peripheral wall, the peripheral wall having a rim, the lid being releasably secured to the rim of the peripheral wall and the base being provided with a plurality of anti-slip means characterised in that the anti-slip means are formed from a hot melt adhesive.

This has as an advantage that the anti-slip means can be produced quickly and easily as part of the manufacturing process. Further, the anti-slip means serve to prevent a pet from pushing the packaging around during feeding. Preferably, the anti-slip means are evenly distributed about the base. More preferably, the anti-slip means are equiangularly spaced about the base.
Even more preferably, the anti-slip means are located towards the upstanding peripheral wall.

Preferably the upstanding peripheral wall comprises a lower region slightly inclined to the vertical and an upper region which inclines in the opposite direction to the vertical, the upper and lower regions of the peripheral wall being separated by a shoulder or ledge such that the shoulder or ledge extends radially outward beyond a radially innermost region of the rim.

The invention will now be described, by way of example only, with reference to the accompanying drawings, in which:
Figure 1 shows a view from beneath packaging in accordance with the present invention; and
Figure 2 shows a section along line II-II of Figure 1.

Referring to the Figures, packaging 2 which may also be used as an animal feeding bowl is shown. The packaging 2 comprises a central bowl 10 and a releasable lid 12.

In the illustrated embodiment, the central bowl 10 has a base 20 and a generally upstanding peripheral wall 22. As shown in the illustrated embodiment, the base comprises an outer ring 20a separated from a central substantially planar region 20c by an inclined surface 20b. It will be understood that other forms may be adopted for the shape of the base 20.

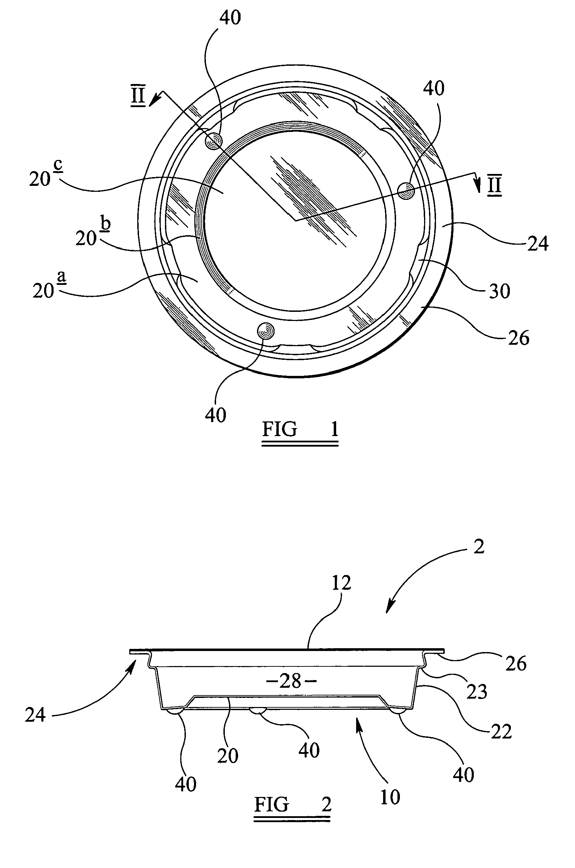

The peripheral wall 22 as shown in Figure 2 comprises a lower region slightly inclined to the vertical and an upper region which inclines in the opposite direction to the vertical. The upper and lower regions of the peripheral wall are separated by a shoulder or ledge 23. However, it will be understood that other forms of the generally upstanding peripheral wall may be provided for. The peripheral wall 22 is provided with a rim 24. In the illustrated embodiment, the rim 24 is formed as a radially outwardly directed flange 26.

The central bowl 10 may be formed from any suitable material by any convenient means. For example in the illustrated embodiment, the central bowl 10 is formed as a plastics moulding. A plurality of locating means 30 are formed during the moulding process. The locating means 30 allow for the ready transport of the empty central bowls 10 during the manufacturing process. The locating means 30 are formed as discontinuities in the peripheral wall 22. For example a lower surface of the base and an outer surface of the peripheral wall may be generally formed with a smooth transition radius save for the discontinuities where the peripheral wall joins the base with a sharper transition. In such a case, the base will extend slightly outwards in the region of the discontinuities. Alternatively, the upstanding peripheral wall may be generally inclined at an angle to the vertical about the circumference of the base save for the discontinuities where the peripheral wall may be inclined more sharply to the vertical. Again in such a case, the base will extend slightly outwards in the region of the discontinuities.

The lid 12 conveniently comprises a foil or plastics member. The lid is releasably secured to the rim of the peripheral wall, for example by a suitable adhesive provided between the rim 24 and the lid 12. Food for a pet is introduced into the central bowl 10 prior to affixing of the lid 12 into position. With the lid 12 in place, a volume 28 is defined by the upper surface of the base 20, the inner face of the peripheral wall 22 and a lower surface of the lid 12.

The base 20 is provided with a plurality of anti-slip means 40. The anti-slip means 40 are formed from a hot melt adhesive. In the illustrated embodiment three such anti-slip means are provided disposed equiangularly about the outer ring 20a of the base 20. In an alternative embodiment (not shown) a greater number of anti-slip means may be used.

Prior to the manufacturing step adding the anti-slip means 40, a plurality of bowls 10 may be stacked one on top of another. The shoulder or ledge 23 extends radially beyond the inner region of the radially outwardly directed flange 26. As such the shoulder or ledge 23 of a first bowl 10 will rest on the inner region of the radially outwardly directed flange 26 of a second bowl 10.

During manufacture, molten hot melt adhesive is placed directly onto the base 20 of the central bowl 10 at a plurality of locations and allowed to cool. It will be seen that in the illustrated embodiment each of the hot melt adhesive locations are located a short distance radially inward from the locating means 30 formed in the peripheral wall. This is simply due to the locating means 30 being used to locate the central bowl 10 during application of the hot melt adhesive. However, it will be understood that other arrangements of the plurality of anti-slip means 40 are possible.

In use, once cooled to room temperature or normal ambient temperature, the hot melt adhesive adheres to the base 20 of the central bowl 10 but is not tacky to the touch. Nevertheless, the cooled hot melt adhesive has a relatively high coefficient of friction such that when the central bowl 10 is placed by the person responsible for feeding the pet at a chosen feeding location the normal feeding action of the pet is generally not sufficient for movement, that is slippage, of the central bowl 10 to occur thereby preventing inadvertent spillage of the food for the pet from the central bowl 10.

It can be seen that the present invention provides convenience for the person responsible for feeding the pet since they need only peel the lid 12 from the central bowl 10, serve the food to the pet and then dispose of the packaging 2.

The invention additionally provides for packaging having anti-slip means that is simple to manufacture and of simple construction.

## Claims

1. Packaging which may also be used as an animal feeding bowl comprising a central bowl (10) and a releasable lid (12), the bowl having a base (20) and an upstanding peripheral wall (22), the peripheral wall having a rim (24), the lid (12) being releasably secured to the rim (24) of the peripheral wall (22) and the base (20) being provided with a plurality of anti-slip means (40) **characterised in that** the anti-slip means (40) are formed from a hot melt adhesive.

2. Packaging according to claim 1, **characterised in that** the anti-slip means (40) are evenly distributed about the base (20).

3. Packaging according to claim 1 or claim 2, **characterised in that** the anti-slip means (40) are equiangularly spaced about the base (20).

4. Packaging according to any previous claim, **characterised in that** the anti-slip means (40) are located towards the upstanding peripheral wall (22).

5. Packaging according to any previous claim, **characterised in that** the upstanding peripheral wall (22) comprises a lower region slightly inclined to the vertical and an upper region which inclines in the opposite direction to the vertical, the upper and lower regions of the peripheral wall being separated by a shoulder or ledge (23) such that the shoulder or ledge (23) extends radially outward beyond a radially innermost region of the rim (24).
